# EUROPÄISCHE PATENTSCHRIFT

(11) **EP 0 907 589 B1**
(45) Veröffentlichungstag und Bekanntmachung des Hinweises auf die Patenterteilung: **01.08.2001**
(21) Anmeldenummer: 97923834.2
(22) Anmeldetag: 22.05.1997
(51) Int. Cl.: B65G 1/00, B65G 1/02, B65G 49/06

(54) **LAGER FÜR PLATTENFÖRMIGES LAGERGUT**
MAGAZINE FOR STORING PLATE-SHAPED ITEMS
SYSTEME D'EMMAGASINAGE POUR PRODUITS SOUS FORME DE PLAQUES

(30) Priorität: 24.05.1996 DE 19621134
(43) Veröffentlichungstag der Anmeldung: 14.04.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: EGNER, Harald, D-74321 Bietigheim (DE)
(86) Internationale Anmeldenummer: DE9701044
(87) Internationale Veröffentlichungsnummer: WO9745341

(56) Entgegenhaltungen:
- EP-A- 0 534 540
- WO-A-95/25688
- DE-A- 2 539 352
- DE-U- 9 104 816
- US-A- 3 698 577

## Beschreibung

Die Erfindung bezieht sich auf ein Lager gemäß dem Oberbegriff des Patentanspruchs 1.

Bekannt sind Lager für plattenförmiges Gut, in denen beispielsweise Halbzeug in der Produktion zwischengelagert werden kann. Derartige Lager gibt es in verschiedenen Varianten. Häufig werden Lagergestelle eingesetzt, in denen das Lagergut senkrecht steht oder mit einem kleinen Winkel gegen die Senkrechte an einer Stützvorrichtung lehnt.

Derartige Lagergestelle werden vor allen Dingen bei empfindlichem Lagergut, beispielsweise bei Glasscheiben eingesetzt, wobei entweder mehrere Platten als Stapel unmittelbar aneinander lehnen oder aber jede Platte an einer eigenen Stütze lehnt.

Die Lagerung als Stapel läßt sich kompakt realisieren, ist jedoch nur bei der Lagerung von Gleichteilen sinnvoll. Durch die EP-A-O 534 540 ist beispielsweise ein Lagergestell bekannt, das die Platten allerdings nur als Stapel in einer Wanne aufnehmen kann.Wird Lagergut mit individuell unterschiedlichen Abmessungen gelagert, beispielsweise Glasplatten nach der Schneidanlage oder Isolierglasscheiben, entstehen durch das Separieren der einzelnen Platten zusätzliche Handhabungsschritte, Daher sollte das Lagergut in solchen Fällen bevorzugt einzeln gelagert werden, was in der Praxis jedoch aus Platzgründen häufig nicht realisiert wird.

Lager der beschriebenen Art werden entweder manuell bedient - häufig unterstützt durch Vakuumgreifer, bzw. verfügen bei großer Anzahl bzw. Abmessungen bzw. Gewichten des Lagergutes in der Regel über Mittel zur mechanischen Bewegung des Lagergutes. D.h., Platten werden mechanisch eingelagert, ausgelagert oder umgesetzt.

Beim Betrieb von Lagern der beschriebenen Art treten in der Praxis unter anderen folgende Schwierigkeiten auf:
a) Sind mehrere Platten als Stapel gelagert, so ergibt sich die Schwierigkeit, in diesem Stapel die zu bewegende Platte zu identifizieren und zu separieren (Suchzeiten, Zeitverlust durch Umsetzen von vorne stehenden Platten, usw.).
b) Empfindliches Lagergut kann bei der Bewegung beschädigt oder zerstört werden.
c) Großer Platzbedarf bei Einzellagerung und bei manueller Bedienung (Gänge).
d) Erschwerte Handhabung von großen und/oder schweren Teilen.

Der Erfindung liegt die Aufgabe zugrunde, ein Lager zu schaffen, welches eine sehr kompakte und gleichzeitig schonende Lagerung von plattenförmigem Lagergut derart erlaubt, daß einzelne Platten gezielt bewegt (ein- bzw, ausgelagert) werden können.

Eine erfindungsgemäße Lösung dieser Aufgabe ist mit ihren Weiterbildungen in den Patentansprüchen gekennzeichnet.

Die Erfindung wird nachstehend anhand von Ausführungsbeispielen unter Bezugnahme auf die Zeichnungen näher beschrieben, in denen zeigen
**Fig. 1** den Grundgedanken des erfindungsgemäßen Lagers in einer perspektivischen Darstellung,
**Fig. 2** beispielhaft die Einbindung eines erfindungsgemäßen Lagerfachs in ein Modul,
**Fig. 3** beispielhaft die Einbindung eines erfindungsgemäßen Moduls in ein komplettes Regal,
**Fig. 4** eine mögliche Ausgestaltung der Übergabe zwischen Bedieneinheit und Ein- und Auslagereinheit.

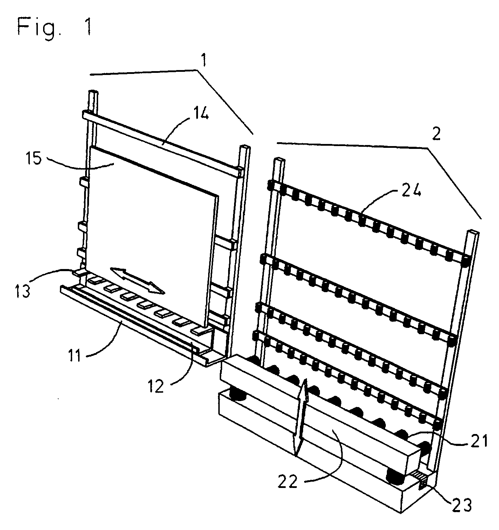

**Fig. 1** zeigt den Grundgedanken des erfindungsgemäßen Lagers mit seinen Einzelteilen in einer perspektivischen Darstellung.

Das Lagerfach **(1)** besteht aus einer Führungsrinne **(11),** einem Schuh **(12)** mit als Zinken ausgeführter Aufnahmefläche **(13)** und einer seitlichen Stützvorrichtung **(14).** Dabei kann der Schuh in der Führungsrinne gleiten oder rollen, wobei im ersten Fall sinnvollerweise eine Schicht aus einem Werkstoff mit günstigen Gleiteigenschaften zwischen dem Schuh und der Führungsrinne eingebracht wird. Ebenso kann das Lagergut **(15)** an der seitlichen Stützvorrichtung gleiten oder rollen.

Die Bedieneinheit **(2)** besteht aus einer vorzugsweise als Rollenbahnstrecke ausgeführten gezinkten Aufnahmefläche **(21),** die über eine Hubvorrichtung **(22)** angehoben und abgesenkt werden kann, eine Ausziehvorrichtung **(23)** und eine Stützvorrichtung **(24)** ähnlich der Stützvorrichtung **(14)** im Lagerfach.

Die beiden Stützvorrichtungen **(14)** und **(24)** liegen in etwa in einer Ebene. Die Hubbewegung der Rollenbahnstrecke **(21)** wirkt parallel zu dieser Ebene.

Die Funktion dieses erfindungsgemäßen Lagers soll beispielhaft am Einlagervorgang beschrieben werden:
1. Die Bedieneinheit **(2)** wird mit dem einzulagernden Gut **(15)** vor dem Lagerfach (1) fluchtend in Position gebracht.
2. Die Hubvorrichtung **(22)** wird in die obere Endstellung gefahren,
3. Die Ausziehvorrichtung **(23)** fährt vor, greift den leeren Schuh **(12)** und zieht diesen aus, Im ausgezogenen Zustand verbleibt das hintere Ende des Schuhs vorzugsweise in der Rinne, damit er beim Einschieben nicht wieder eingefädelt werden muß. Desweiteren kommen die Zinken des Schuhs im ausgezogenen Zustand unter den Lücken der Rollenbahnstrecke der Bedieneinheit zu stehen.
4. Die Hubvorrichtung **(22)** wird abgesenkt. Dadurch wird das Lagergut **(15)** auf dem Schuh **(12)** abgesetzt.
5. Die Ausziehvorrichtung **(23)** schiebt den beladenen Schuh **(12)** in das Lagerfach **(1)** ein, löst den Griff und fährt zurück.
6. Die Bedieneinheit **(2)** steht für den nächsten Transport zur Verfügung,

Der Auslagervorgang läuft sinngemäß in umgekehrter Richtung ab.

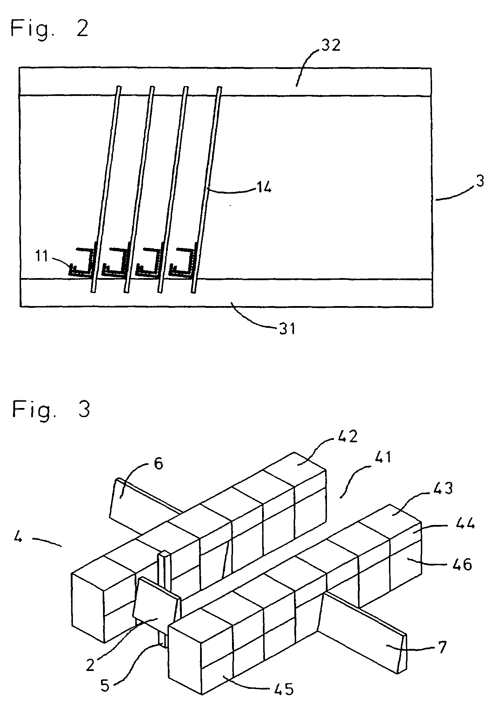

**Fig. 2** zeigt eine beispielhafte Einbindung des erfindungsgemäßan Lagerfachs **(1)** in ein Modul **(3).** Das Modul besteht aus einem unteren Querträger **(31)** und einem oberen Querträger **(32),** an denen die Führungsrinnen **(11)** und die Stützvorrichtungen **(14)** nebeneinander angebracht sind. Die Höhe und die Breite und die Tiefe der Lagerfächer können den Anforderungen des einzulagernden Lagergutes angepasst werden. Die Anzahl von Lagerfächern pro Modul ist ebenfalls frei wählbar.

**Fig. 3** zeigt eine beispielhafte Einbindung des erfindungsgemäßen Moduls **(3)** in ein Regal **(4).** Dargestellt ist eine Ragalgasse **(41)** mit beidseitigen Regalzeilen **(42)** und **(43).** In der Gasse kann die Bedieneinheit **(2)** bewegt werden, beispielsweise als Aufbau auf einem Regalbediengerät **(5).**

Dargestellt sind Regalmodule **(44), (45)** und **(46)** in unterschiedlichen Größen, die neben- und übereinander in den Regalzeilen angebracht sind. Ihre Abmessungen und Anzahl können nach dem Spektrum des zu lagernden Lagergutes gewählt werden,

Dargestellt sind ferner eine Einlagereinheit **(6)** und eine Auslagereinheit **(7),** die derart an die Regalzeilen **(42)** bzw. **(43)** angebunden sind, daß die Übergabestellen zur Bedieneinheit **(2)** für diese wie ein normales Lagerfach **(1)** liegen und geringen Bauraum in der Regalzeila beanspruchen.

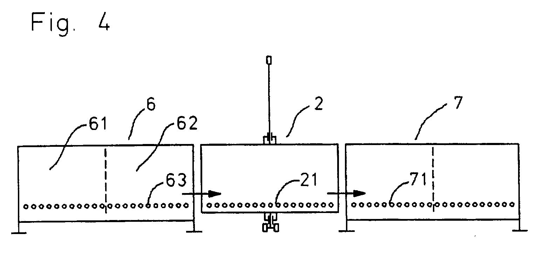

**Fig. 4** zeigt eine mögliche Ausgestaltung der Einlagereinheit **(6),** der Auslagereinheit **(7)** und der Übergabe zwischen diesen beiden Einheiten und der Bedieneinheit **(2).** Die Einlagereinheit besteht aus einem Identifikationspunkt **(61)** und einem Übergabepunkt **(62)** zur Bedieneinheit. Die Übergabe erfolgt nach dem bekannten Schema einer Rollenbahnübergabe, wobei eine Staurollenförderbahnstrecke **(63)** der Einlagereinheit **(6)** das Lagergut an die angetriebene Rollenbahnstrecke **(21)** der Bedieneinheit **(2)** übergibt und diese das Lagergut beim Auslagern wiederum an eine Staurollenförderbahnstrecke **(71)** der Auslagereinheit **(7)** übergibt. Anschließend an die Auslagereinheit wird das Lagergut manuell oder mechanisch an weitere Bearbeitungsschritte weitergereicht. Die Ein- und Auslagereinheiten sind beispielhaft fluchtend zueinander in den gegenüberliegenden Regalzeilen angeordnet, um die Taktzeit der Bedieneinheit **(2)** gering zu halten.

Die mit der Erfindung erzielten Vorteile gegenüber konventionellen Lagern bestehen insbesondere im folgenden:
a) Schonende Lagerung und Handhabung des Lagergutes.
b) Kompakte Lagerung des Lagergutes.
c) Kurze Zugriffszeiten auf das Lagergut: durch die Lagerung als Einzelstück in einem bekannten Lagerfach ist ein gezielter Zugriff möglich.
d) Die baukastenartige Zusammenstellung eines Regals aus Modulen erlaubt eine Anpassung der Lagerfachanzahl und -größen an die spezifischen Gegebenheiten sowie einen einfachen Umbau bzw. Anbau bestehender Lager.
e) Die Bewegungen im und am Lagerfach sind unkritisch:
   1. Da der Schuh auch in der ausgezogenen Endstellung in der Rinne eingefädelt bleibt, werden an die Positioniergenauigkeit der Bedieneinheit (Flucht zum Lagerfach) keine besonders hohen Anforderungen gestellt.
   2. Auch muß nicht - im Gegensatz etwa zu Gabeln, mit denen das Lagergut im Lagerfach angehoben wird - in das Lagerfach eingefahren werden. Die kritische Bewegung des Anhebens wird außerhalb des Lagerfachs auf der Bedieneinheit durchgeführt.
f) Einsatz von preiswerten Bauteilen im Lagerfach: Rinne und Schuh sind beispielsweise aus Blech, Stützvorrichtungen beispielsweise aus Profilstäben gefertigt.

Besonders vorteilhaft ist der Einsatz des erfindungsgemäßen Lagers bei der Lagerung von Isolierglasscheiben in der Fensterfertigung.

Bei diesem Anwendungsfall ergeben sich durch das erfindungsgemäße Lager weitere Vorteile gegenüber konventionellen Lagern:
g) Isolierglasscheiben können sofort beim Wareneingang vom Glashersteller im Identifikationspunkt **(61)** auf Mängel (Risse, Maßabweichungen, Schlieren, usw.) untersucht und gegebenenfalls zurückgewiesen werden.
h) Die Lagerverwaltung erlaubt eine präzise Übersicht über die eingelagerten Glasscheiben, und eröffnet unter anderem die Möglichkeit, einen Fertigungsauftrag erst dann freizugeben, wenn alle benötigten Glasscheiben im Lager bereitstehen (Vollständigkeitsprüfung).
i) Gegenüber der herkömmlichen Bereitstellung der Glasscheiben in Stapeln auf Böcken entfallen Such- und Separisrzeiten, Darüberhinaus wird Platz eingespart.
j) Die automatisierte Handhabung und die Lagerung als Einzelstück schützen die Glasscheiben vor Beschädigungen.

Vorstehend ist die Erfindung exemplarisch ohne Beschränkung des allgemeinen Erfindungsgedankens und/oder des Anwendungsbereiches beschrieben worden. Es wird darauf hingewiesen, daß die Zeichnungen und ihre Beschreibungen mögliche Varianten einer Ausgestaltung des erfindungsgemäßen Lagers darstellen. Die Zeichnungen nehmen nicht für sich in Anspruch, bezüglich Maßstab und Größen- bzw. Längenverhältnissen verbindlich zu sein. Sie sind vielmehr als Beispiele gedacht, die das Prinzip der Erfindung aufzeigen.

Selbstverständlich kann das erfindungsgemäße Lager auch für andere Aufgaben herangezogen werden, bei denen die schonende Lagerung und eine kurzfristige Bereitstellung von plattenförmigem Lagergut benötigt wird, beispielsweise bei der Fertigung von Holzmöbeln.

### Bezugszeichen-Liste:

- 1: Lagerfach
- 11: Führungsrinne
- 12: Schuh
- 13: Aufnahmefläche
- 14: Stützvorrichtung
- 15: Lagergut

- 2: Bedieneinheit
- 21: Rollenbahnstrecke (Aufnahmefläche)
- 22: Hubvorrichtung
- 23: Ausziehvorrichtung
- 24: Stützvorrichtung

- 3: Modul
- 31: Unterer Querträger
- 32: Oberer Querträger

- 4: Regal
- 41: Regalgasse
- 42: Erste Regalzeile
- 43: Zweite Regalzeile
- 44: Regalmodul klein
- 45: Regalmodul mittel
- 46: Regalmodul groß

- 5: Regalbediengerät

- 6: Einlagereinheit
- 61: Identifikationspunkt
- 62: Übergabepunkt
- 63: Staurollenförderbahnstrecke

- 7: Auslagereinheit
- 71: Staurollenförderbahnstrecke

## Patentansprüche

1. Lager zum Lagern von plattenförmigen Gut, in dem dieses Lagergut (15) auf einem Schuh (12) steht, der beweglich in einer Führungsrinne (11) angeordnet ist und auf dem das Lagergut (15) in einem Lagerfach (1) mit einem kleinen Winkel gegen die Senkrechte an einer Stützvorrichtung (14) lehnt,
dadurch gekennzeichnet, dass der Schuh (12) eine als Zinken ausgeführte Aufnahmefläche (13) aufweist, durch deren Aussparungen das Lagergut (15) mit den Zinken einer Hubvorrichtung (22) einer Bedieneinheit (2) angehoben und abgesetzt werden kann.

2. Vorrichtung nach Anspruch 1,
dadurch gekennzeichnet, dass die Bedieneinheit (2) über eine Ausziehvorrichtung (23) zum Greifen und Ausziehen und Einschieben des Schuhs (12) verfügt.

3. Vorrichtung nach den Ansprüchen 1 bis 2,
dadurch gekennzeichnet, dass die Hubvorrichtung (22) der Bedieneinheit (2) in der oberen und unteren Endstellung ein Ausziehen und Einschieben des Schuhs (12) erlaubt.

4. Vorrichtung nach den Ansprüchen 1 bis 3,
dadurch gekennzeichnet, dass die Zinken der Hubvorrichtung (22) als Rollen ausgeführt sind, mit denen das Lagergut (15) avon einer Einlagereinheit (6) übernommen und an eine Auslagereinheit (7) übergeben werden kann.

5. Vorrichtung nach einem der vorherigen Ansprüche,
dadurch gekennzeichnet, dass Lagerfächer (1) gleicher Größe nebeneinander zu Modulen (3) angeordnet werden, die wiederum nebeneinander und/oder übereinander in unterschiedlicher oder gleicher Größe zu anwendungsspezifischen Regalzeilen (42, 43) kombiniert werden können.

6. Vorrichtung nach einem der vorherigen Ansprüche
dadurch gekennzeichnet, dass die Ein- und Auslagereinheiten (6, 7) an beliebiger Stelle einer Regalzeile (42, 43) in einem Modul (3) der größten Größe voll integriert werden können.

## Claims

1. Storage system for storing panel-shaped goods, in which these stored goods (15) stand on a shoe (12) which is arranged moveable in a guide channel (11) and on which the stored goods (15) lean in a storage compartment (1) at a slight angle towards the vertical against a supporting device (14),
**characterised in that** the shoe (12) has a receiving surface (13) realised as tines, through the recesses of which the stored goods (15) can be raised and deposited with the tines of a lifting device (22) of a control unit (2).

2. Device according to claim 1,
**characterised in that** the control unit (2) has an extraction device (23) for grasping and extracting and inserting the shoe (12).

3. Device according to claims 1 to 2,
**characterised in that** the lifting device (22) of the control unit (2) permits, in the upper and lower end position, extraction and insertion of the shoe (12).

4. Device according to claims 1 to 3,
**characterised in that** the tines of the lifting device (22) are realised as rollers, with which the stored goods (15) can be taken from a unit (6) for putting into storage and transferred to a unit (7) for removing from storage.

5. Device according to one of the preceding claims,
**characterised in that** storage compartments (1) of the same size can be arranged beside one another to form modules (3), which in turn can be combined beside and/or above one another, in differing or identical size, to form application-specific shelf rows (42, 43).

6. Device according to one of the preceding claims,
**characterised in that** the units (6, 7) for putting into or removing from storage can be completely integrated at any point of a shelf row (42, 43) in a module (3) of the largest size.

## Revendications

1. Magasin pour le stockage de produit sous forme de plaques, dans lequel le produit stocké (15) est monté droit sur un patin (12), mobile dans une rainure de guidage (11) et sur lequel le produit stocké (15) est en appui incliné avec un petit angle par rapport à la verticale contre une structure d'appui (14) dans un casier de stockage (1),
caractérisé en ce que
le patin (12) comprend une surface de réception (13) en forme de râteau entre les évidements de laquelle le produit stocké (15) peut être soulevé et enlevé par les dents d'un dispositif de levage (22) d'une unité de manutention (2).

2. Magasin pour le stockage selon la revendication 1,
caractérisé en ce que
l'unité de manutention (2) comporte un dispositif d'extraction (23) pour prendre et tirer ou pousser le patin (12).

3. Magasin pour le stockage selon l'une quelconque des revendications 1 à 2,
caractérisé en ce que
le dispositif de levage (22) de l'unité de manutention (2) permet de tirer et de pousser le patin (12) dans sa position finale de course haute et basse.

4. Magasin pour le stockage selon l'une quelconque des revendications 1 à 3,
caractérisé en ce que
les dents du dispositif de levage (22) sont en forme de rouleaux à l'aide desquels le produit stocké (15) peut être pris par une unité de stockage (6) et transmis à une unité de déstockage (7).

5. Magasin pour le stockage selon l'une quelconque des revendications précédentes,
caractérisé en ce que
des casiers de stockage (1) de même taille sont disposés côte à côte dans des modules (3) qui peuvent alors être combinés les uns à côté des autres et/ou les uns sur les autres, de taille égale ou différente, pour former des rangées de rayonnage (42, 43) spécifiques à l'application.

6. Magasin pour le stockage selon l'une quelconque des revendications précédentes,
caractérisé en ce que
les unités de stockage et de déstockage (6, 7) peuvent être intégrées totalement à un endroit quelconque de la rangée de rayonnage(42, 43) dans un module (3) de la plus grande taille.
